# FASCICULE DE BREVET EUROPEEN

(11) **EP 4 008 591 B1**
(45) Date de publication et mention de la délivrance du brevet: **04.09.2024**
(21) Numéro de dépôt: 21212171.9
(22) Date de dépôt: 03.12.2021
(51) Int. Cl.: B60R 13/02, B32B 5/02, H01B 1/00

(54) **PIÈCE COMPRENANT UNE COUCHE CONDUCTRICE ET PROCÉDÉ DE FABRICATION D'UNE TELLE PIÈCE**
BAUTEIL MIT EINER LEITERSCHICHT UND VERFAHREN ZUR HERSTELLUNG EINES SOLCHEN BAUTEILS
PART COMPRISING A CONDUCTIVE LAYER AND METHOD FOR MANUFACTURING SUCH A PART

(30) Priorité: 04.12.2020 FR 2012684
(43) Date de publication de la demande: 08.06.2022
(73) Titulaire: Faurecia Intérieur Industrie, 92000 Nanterre (FR)
(72) Inventeur: BEAU, Godefroy, 92250 LA GARENNE COLOMBES (FR); NOURI, Adnen, 95800 CERGY (FR)
(74) Mandataire: Lavoix

(56) Documents cités:
- US-A1- 2010 276 497
- US-A1- 2017 245 326

## Description

La présente invention concerne une pièce, qui peut être par exemple une pièce de de garnissage de véhicule automobile, et un procédé de fabrication d'une telle pièce.

Il est possible de réaliser une pièce de garnissage de véhicule automobile comprenant un stratifié possédant une couche de décor, destinée à être visible, et une couche de support, conférant sa forme à la pièce de garnissage, la couche de support étant réalisée en un matériau composite comprenant des fibres naturelles noyées dans une matrice en matière plastique.

L'utilisation de fibres naturelles permet de fournir une pièce de garnissage allégée et de réduire l'impact environnemental.

Il est possible d'intégrer à la pièce de garnissage certaines fonctionnalités à destination des utilisateurs du véhicule, ces fonctionnalités étant accessibles via une surface externe de la pièce de garnissage.

Ainsi, la surface externe de la pièce de garnissage comprend par exemple des zones tactiles pour permettre de piloter certaines fonctions du véhicule.

Des éléments fonctionnels permettant de réaliser ces fonctionnalités, tels que des circuits imprimés, sont par exemple intégrés dans la pièce de garnissage, sous la couche de décor, afin de ne pas être visibles par l'utilisateur.

Les éléments fonctionnels sont par exemple collés sur la couche de support avant qu'elle ne soit recouverte par la couche de décor.

Un tel procédé est cependant fastidieux et peut être compliqué, notamment lorsque plusieurs zones tactiles sont prévues, divers éléments fonctionnels devant alors être fixés en divers endroits de la couche de support.

En outre, en cas de mauvais positionnement du ou des élément(s) fonctionnel(s) sur la couche de support et par rapport à la couche de décor, la qualité de la pièce de garnissage est dégradée, par exemple parce que les zones tactiles ne s'étendent pas exactement en regard d'indications prévues sur la surface externe de la pièce de garnissage pour indiquer leur présence et leur position.

US2017/245326A1 divulgue une structure laminée pour revêtement de sol chauffant comprenant une couche décorative et une sous-couche entre lesquelles sont disposés une couche conductrice comprenant des fibres de verre et des fibres de carbone, des conducteurs disposés sur la couche conductrice, et des couches isolantes disposées de part et d'autre de la couche conductrice.

Un des buts de l'invention est de proposer une pièce, par exemple une pièce de garnissage de véhicule automobile, qui puisse être munie de fonctionnalités de manière simple et fiable.

A cet effet, l'invention propose une pièce selon la revendication 1.

L'inclusion dans la pièce d'une couche conductrice réalisée dans un textile conducteur d'électricité permet d'exploiter les propriétés de conduction électrique du textile pour ajouter des fonctionnalités à la pièce.

Le textile, qui comprend des fibres conductrices réalisées dans un matériau conducteur d'électricité, par exemple des fibres de carbones, et des fibres thermoplastiques réalisées dans un matériau thermoplastique, permet d'assurer la conduction électrique tout en facilitant la fixation du composant électrique sur la couche conductrice et la connexion électrique du conducteur électrique du composant électrique à la couche conductrice.

En particulier, la gaine réalisée en un matériau thermoplastique et les fibres thermoplastiques du textile peuvent être soudées ensemble ce qui assure la liaison mécanique du composant électrique sur la couche conductrice, et le conducteur électrique du composant électrique peut être mis en contact avec les fibres conductrices du textile lors du soudage. La liaison mécanique et la connexion électrique peuvent être réalisées simultanément lors de l'opération de soudage.

La présence d'une ou plusieurs portions de contact et d'une ou plusieurs portions de liaison contiguës, i.e. qui sont disposées côtes à côte en se touchant par leurs bords, permet d'assurer un contact électrique et une liaison mécanique fiables.

Des caractéristiques optionnelles de la pièce sont définies aux revendications 2 à 10.

L'invention propose aussi un procédé de fabrication selon la revendication 11.

Des caractéristiques optionnelles du procédé de fabrication sont définies aux revendications 12 à 15.

L'invention et ses avantages seront mieux compris à la lecture de la description qui va suivre, donnée uniquement à titre d'exemple non limitatif, et faite en référence aux dessins annexés, sur lesquels :
- la Figure 1 illustre une pièce comprenant un composant électrique soudé sur une couche conductrice réalisée dans un textile conducteur d'électricité ;
- les Figures 2 et 3 illustrent le soudage du composant électrique sur la couche conductrice réalisée dans un textile conducteur d'électricité, pour la fabrication de la pièce de la Figure 1 ;

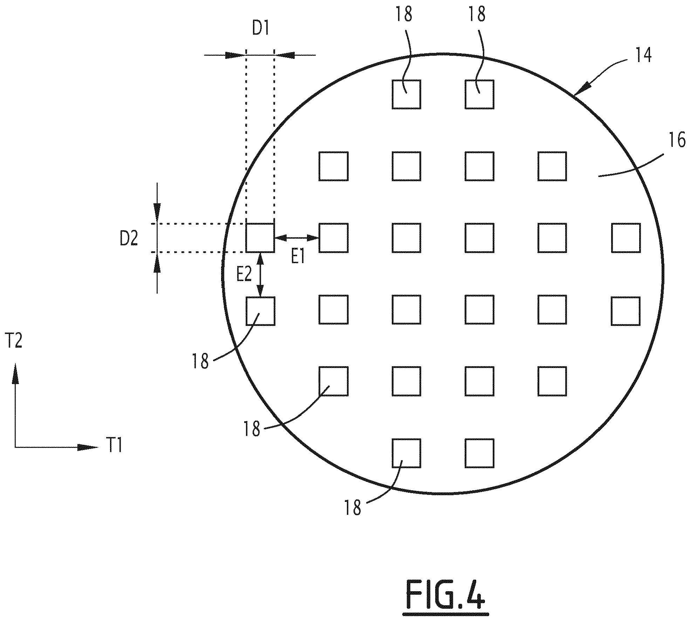

- la Figure 4 est une vue de face d'une tête de soudage utilisable pour le soudage du composant électrique sur la couche conductrice d'électricité ; et
- la Figure 5 est une vue schématique en coupe d'une pièce comprenant un stratifié intégrant la couche conductrice muni du composant électrique.

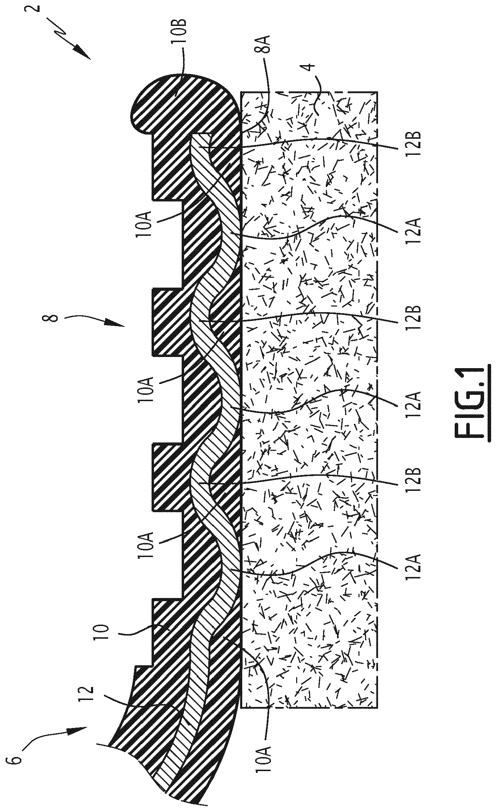

Comme illustré sur la Figure 1, une pièce 2 comprend une couche conductrice 4 réalisée dans un textile conducteur d'électricité et un composant électrique 6 ayant une portion de connexion 8 soudée sur la couche conductrice 4 de manière à fixer le composant électrique 6 sur la couche conductrice 4 et à raccorder électriquement le composant électrique 6 à la couche conductrice 4.

Le textile est réalisé de manière que la couche conductrice 4 est propre à conduire l'électricité.

Le textile est formé de fibres comprenant des fibres conductrices réalisées dans un matériau conducteur d'électricité et des fibres thermoplastiques réalisées dans un matériau thermoplastique.

Dans un exemple de réalisation, les fibres conductrices sont des fibres de carbone et/ou des fils métalliques, en particulier des fils de cuivre et/ou des fils d'aluminium. Le carbone est un matériau conducteur d'électricité.

Dans un exemple de réalisation particulier, les fibres conductrices sont des fibres de carbone.

Dans un exemple de réalisation, les fibres thermoplastiques sont des fibres de polyoléfine, des fibres de polypropylène, des fibres de polyester, de fibres de polyéthylène téréphtalate (PTFE), des fibres de polycarbonate (PC) et/ou des fibres de polyméthacrylate de méthyle (PMMA).

Dans un exemple de réalisation particulier, les fibres thermoplastiques sont des fibres de polyoléfine, en particulier des fibres de polypropylène.

Dans un exemple de réalisation, le textile est tissé. Dans ce cas, les fibres conductrices et les fibres thermoplastiques sont tissées entre elle pour former un textile tissé.

Dans un autre exemple de réalisation préféré, le textile est non-tissé. Dans ce cas, les fibres conductrices et les fibres thermoplastiques sont agglomérées entre elles sans être tissées.

Le textile non-tissé est isotrope (les fibres conductrices et les fibres thermoplastiques ne présentent aucune orientation privilégiée) ou anisotrope (les fibres conductrices et les fibres thermoplastiques présentent une orientation privilégiée).

Le textile non-tissé est de préférence consolidé, i.e. les fibres conductrices et les fibres thermoplastiques sont liées entre elles.

Dans un exemple de réalisation, la consolidation des fibres conductrices et des fibres thermoplastiques est réalisée par aiguilletage, par mise sous pression et/ou par chauffage. L'aiguilletage et la mise sous pression permet d'entremêler intimement les fibres (i.e. les fibres conductrices et les fibres thermoplastiques). Le chauffage permet un soudage des fibres thermoplastiques entre elles et avec les fibres conductrices.

Le composant électrique 6 comprend une gaine 10 et un conducteur électrique 12 s'étendant à l'intérieur de la gaine 10.

La gaine 10 assure l'isolation électrique du conducteur électrique 12 vis-à-vis de l'environnement. Le conducteur électrique 12 est reçu à l'intérieur de la gaine 10 qui entoure le conducteur électrique 12.

La gaine 10 est isolante électriquement et réalisée dans un matériau thermoplastique.

Dans un exemple de réalisation, la gaine 10 est réalisée en polypropylène, en polychlorure de vinyle (PVC), en poly(téréphtalate d'éthylène) (PET), en polycarbonate (PC) ou en polyméthacrylate de méthyle (PMMA).

De préférence, la gaine 10 est réalisée dans un matériau thermoplastique propre à se souder avec le matériau thermoplastique des fibres thermoplastiques de la couche conductrice 4.

En particulier, dans un exemple de réalisation, la gaine 10 et les fibres thermoplastiques de la couche conductrice 4 sont réalisées dans le même matériau thermoplastique.

Le conducteur électrique 12 est par exemple réalisé dans un matériau métallique, par exemple du cuivre. Le conducteur électrique 12 est par exemple un fil ou une piste électrique.

Le composant électrique 6 est par exemple un fil électrique isolé comprenant un conducteur électrique 12 sous la forme d'un fil électrique entouré par la gaine 10. En variante, le composant électrique 6 est par exemple une nappe électrique flexible comprenant une piste électrique, la gaine comprenant deux films, la piste étant intercalée entre les deux films.

Dans la portion de connexion 8 soudée sur la couche conductrice 4, la gaine 10 n'est pas retirée dans la portion de connexion 8 pour réaliser le soudage. Lors du soudage de la portion de connexion 8 sur la couche conductrice 4, la gaine 10 entoure le conducteur électrique 12 dans la portion de connexion 8.

La portion de connexion 8 est soudée sur la couche conductrice 4 de telle manière que, dans la portion de connexion 8, la gaine 10 est soudée à la couche conductrice 4 et le conducteur électrique 12 est en contact électrique avec la couche conductrice 4, en particulier avec les fibres conductrices de la couche conductrice 4.

Le soudage de la gaine 10 à la couche conductrice 4 permet d'assurer la liaison mécanique de la portion de connexion 8 à la couche conductrice 4. La mise en contact du conducteur électrique 12 avec la couche conductrice 4 permet d'assurer le raccordement électrique du composant électrique 6 à la couche conductrice 4. Le soudage de la gaine 10 à la couche conductrice 4 est réalisé de manière à souder la gaine 10 avec la couche conductrice 4, en particulier avec les fibres thermoplastiques de la couche conductrice 4.

Dans la portion de connexion 8, la gaine 10 est soudée à la couche conductrice 4 de manière à assurer la liaison mécanique entre la portion de connexion 8 et la couche conductrice 4.

La portion de connexion 8 est en contact avec la couche conductrice 4 par une surface de contact 8A de la portion de connexion 8. La connexion électrique et la liaison mécanique entre la portion de connexion 8 et la couche conductrice 4 sont réalisées via cette surface de contact 8A.

Dans la portion de connexion 8 du composant électrique 6 soudée sur la couche conductrice 4, le conducteur électrique 12 possède un ou des portion(s) de contact 12A, chaque portion de contact 12A étant en contact avec la couche conductrice 4, et la gaine 10 possède un ou des portion(s) de liaison 10A, chaque portion de liaison 10A étant en contact avec la couche conductrice 4.

Chaque portion de contact 12A assure le contact électrique entre le conducteur électrique 12 et la couche conductrice 4. En particulier, chaque portion de contact 12A sort de la gaine 10 à l'interface entre la gaine 10 et la couche conductrice 4 pour venir en contact avec la couche conductrice 4. Chaque portion de contact 12A affleure la surface de contact 8A.

Chaque portion de liaison 10A assure la liaison mécanique entre la gaine 10 et la couche conductrice 4. En particulier, chaque portion de liaison 10A est en contact avec et soudée sur la couche conductrice 4.

La surface de contact 8A de la portion de connexion 8 en contact avec la couche conductrice 4 est formée par la(les) portion(s) de contact 12A et la(les) portion(s) de liaison 10A, qui sont situées les unes à côtés des autres.

La(les) portion(s) de contact 12A est(sont) contiguë(s) avec la(les) portion(s) de liaison 10A.

En d'autres termes, la(les) portion(s) de contact 12A et la(les) portions(s) de liaison 10A sont situées les unes à côtés des autres en se touchant, i.e. sans espace vide entre la(les) portion(s) de contact 12A et la(les) portion(s) de liaison 10A

Chaque portion de contact 12A est contiguë avec la portion de liaison 10A ou au moins une parmi les portions de liaison 10A. Chaque portion de liaison 10A est contiguë avec la portion de contact 12A ou au moins une parmi les portions de contact 12A.

En particulier, chaque portion de contact 12A est entourée par une ou plusieurs portions de liaison 10A contiguë(s) à cette portion de contact 12A.

Le contact électrique entre le conducteur électrique 12 et la couche conductrice 4 et la liaison mécanique entre la gaine 10 et la couche conductrice 4 sont réalisées conjointement via la portion de connexion 8, de manière contiguë.

Dans un exemple de réalisation particulier, le conducteur électrique 12 comprend plusieurs portions de contact 12A écartées les unes des autres.

Dans un exemple de réalisation, les portions de contact 12A sont réparties de manière matricielle.

Dans un exemple de réalisation, dans la portion de connexion 8 soudée sur la couche conductrice 4, le conducteur électrique 12 comprend au moins une portion écartée 12B, chaque portion écartée 12B étant écartée de la couche conductrice 4.

Une portion de liaison 10A de la gaine 10 est interposée entre chaque portion écartée 12B du conducteur 12 et la couche conductrice 4.

Ainsi, dans un tel mode de réalisation, au moins une portion de liaison 10A est encore présente entre le conducteur électrique 12 et la couche conductrice 4.

Dans un exemple de réalisation, les portions de contact 12A du conducteur électrique 12 sont espacées les unes des autres, les portions écartées 12B s'étendant entre les portions de contact 12A.

Dans la portion de connexion 8, chaque portion de contact 12A du conducteur électrique 12 forme une dépression ou un creux dans le conducteur électrique 12, chaque portion écartée 12B formant une proéminence ou une bosse.

Le conducteur électrique 12 présente ainsi dans la portion de connexion 8, une forme bosselée.

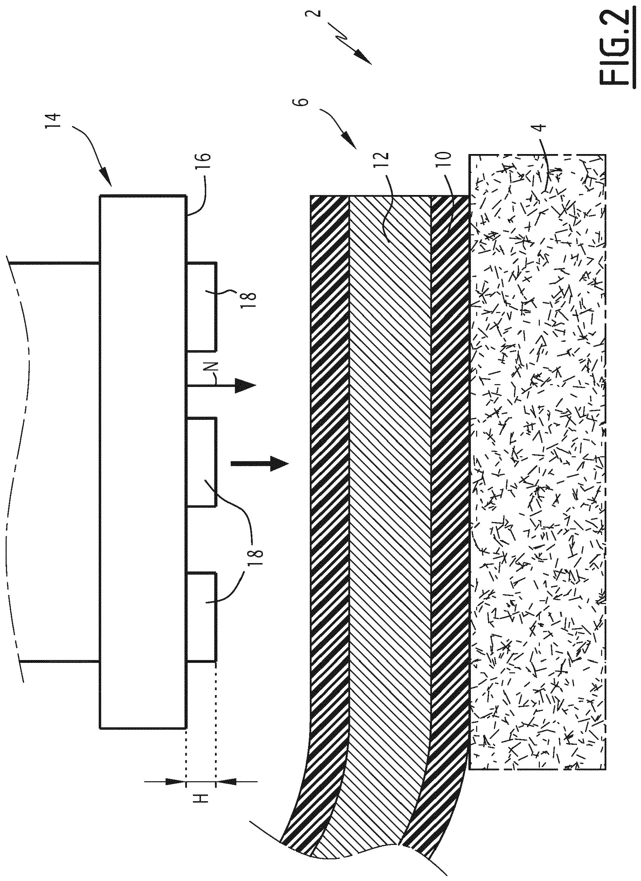

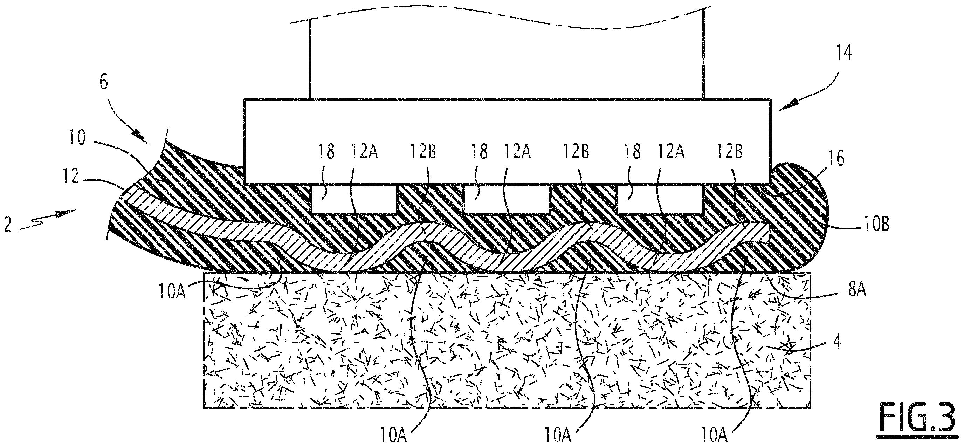

Les Figures 2 et 3 illustrent le soudage de la portion de connexion 8 du composant électrique 6 sur la couche conductrice 4.

Comme visible sur ces Figures 2 et 3, dans la portion de connexion 8 soudée sur la couche conductrice 4, le conducteur électrique 12 est déformé transversalement à sa ligne d'extension à l'intérieur de la gaine 10 de manière à être en contact avec la couche conductrice 4.

La portion de connexion 8 est initialement non déformée.

Dans le cas d'un composant électrique 6 qui est un fil électrique gainé, la portion de connexion 8 présente avant soudage une section transversale sensiblement circulaire, le conducteur électrique 12 étant situé au centre et étant complètement entouré par la gaine 10 situé à la périphérie.

Dans le cas d'un composant électrique 6 qui est une nappe électrique, la portion de connexion 8 présente avant soudage la forme d'une bande plate, le conducteur électrique 12 ayant la forme d'une piste conductrice prise en sandwich entre deux films définissant la gaine 10.

Le soudage est réalisé par exemple à l'aide d'une tête de soudage 14 comprenant une surface de soudage 16 destinée à être appliquée sur la portion de connexion 8 du composant électrique 6 de manière à la presser contre la couche conductrice 4, la tête de soudage 14 comprenant en option une ou plusieurs protrusion(s) 18 en saillie de la surface de soudage 16.

En vue du soudage, la portion de connexion 8 est appliquée contre la couche conductrice 4 (Figure 2). La portion de connexion 8 est en contact avec la couche conductrice 4 par l'intermédiaire de la gaine 10. Une partie de la gaine 10 est initialement interposée entre le conducteur électrique 12 et la couche conductrice 4.

Lors du soudage (Figure 3), la tête de soudage 14 est pressée contre la portion de connexion 8. La surface de soudage 16 presse la portion de connexion 8 contre la couche conductrice 4, ce qui presse la gaine 10 contre la couche conductrice 4 et assure le soudage de la gaine 10 sur la couche conductrice 4.

Le soudage est réalisé de manière que la gaine 10 est soudée sur la couche conductrice 4, le conducteur électrique 12 étant mis en contact électrique avec la couche conductrice 4.

En particulier, le soudage est réalisé de telle manière que le conducteur électrique 12 est déformé pour former chaque portion de contact 12A sortant de la gaine 10 pour venir en contact avec la couche conductrice 4.

Le cas échéant, chaque protrusion 18 s'introduit localement dans la gaine 10 et enfonce localement le conducteur électrique 12 vers la couche conductrice 4, de telle manière que le conducteur électrique 12 est déformé en formant la(les) portion(s) de contact 12A, le conducteur électrique 12 est mis en contact avec la couche conductrice 4.

Le conducteur électrique 12 est localement poussé par chaque protrusion 18 à l'intérieur de la gaine 10 lors du soudage, vers la couche conductrice 4, de sorte qu'il vient en contact avec la couche conductrice 4, et en particulier avec les fibres conductrices du textile formant la couche conductrice 4. Le conducteur électrique 12 est alors raccordé électriquement à la couche conductrice 4 (Figure 3).

La gaine 10 est écrasée entre la surface de soudage 16 et la couche conductrice 4 et la matière de la gaine 10 est en partie chassée vers la périphérie de la surface de soudage 16.

La gaine 10 forme par exemple un bourrelet périphérique 10B à la périphérie de portion de connexion 8 soudée sur le couche conductrice 4, comme illustré à droite sur les Figures 1 et 3.

Dans la portion de connexion 8, du fait du soudage, la matière de la portion de la gaine 10 située entre le conducteur électrique 12 et la couche conductrice 4 est au moins en partie chassée, de sorte que le conducteur électrique 12 vient en contact avec la couche conductrice 4.

En particulier, la matière de la gaine 10 est chassée de la zone située entre chaque portion de contact 12A, déformée lors du soudage pour être mise en contact avec la couche conductrice 4, et la couche conductrice 4.

A l'issue du soudage, chaque portion de contact 12A sort de la gaine 10 sur la surface de contact 8A de la portion de connexion 8 pour venir en contact avec la couche conductrice 4.

La gaine 10 reste présente autour de chaque portion de contact 12A en formant une ou plusieurs portions de liaison 10A entourant la portion de contact 12A avec laquelle elle(s) est(sont) contiguë(s).

La prévision d'une ou plusieurs protrusion(s) 18 permet de déformer localement le conducteur électrique 12 pour qu'il vienne en contact avec la couche conductrice 4, sans chasser complètement la portion de la gaine 10 initialement présente entre le conducteur électrique 12 et la couche conductrice 4.

Chaque protrusion 18 permet par exemple de former une portion de contact 12A. Chaque portion de contact 12A correspond à une protrusion 18.

Chaque protrusion 18 présente des caractéristiques géométriques appropriées pour assurer la mise en contact du conducteur électrique 12 avec la couche conductrice 4 lors du soudage.

De préférence, chaque protrusion 18 présente une hauteur (prise suivant la normale N à la surface de soudage 16) supérieure à la moitié de l'épaisseur de la portion de connexion 8 avant soudage et/ou inférieure au quadruple de l'épaisseur de la portion de connexion 8 avant soudage.

Lorsque plusieurs protrusions 18 sont prévues, elles sont de préférence réparties sur la surface de soudage 16 de manière à favoriser la mise en contact du conducteur électrique 12 avec la couche conductrice 4 lors du soudage, tout en réalisant un soudage satisfaisant de la gaine 10 sur la couche conductrice 4.

Suivant au moins une direction transversale perpendiculaire à la normale N à la surface de soudage 16, chaque protrusion 18 présente une dimension transversale et est écartés de chaque autre protrusion 18 adjacente d'une distance d'écartement.

De préférence, la dimension transversale de chaque protrusion 18 selon au moins une direction transversale est sensiblement égale à l'écartement entre les protrusions suivant ladite dimension transversale.

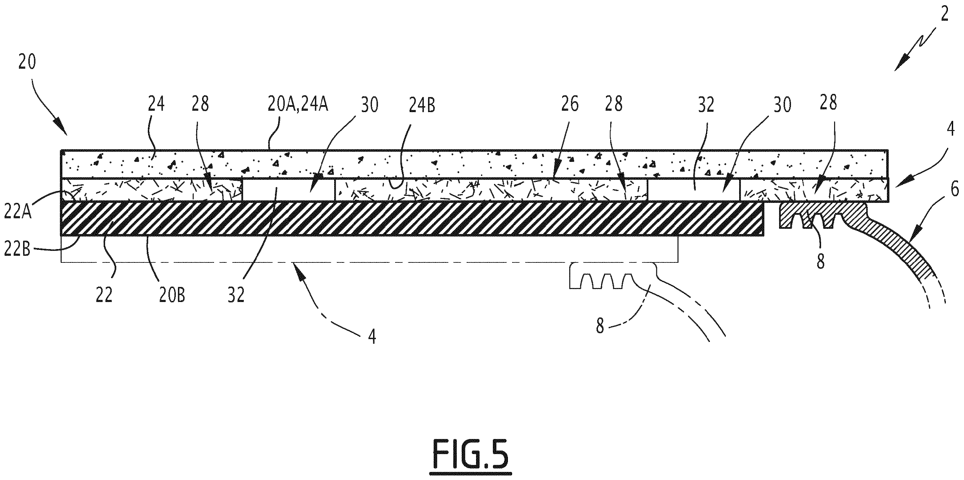

Comme illustré sur la Figure 5, dans un exemple de réalisation, les protrusions 18 sont réparties sur la surface de soudage 16 en étant alignées suivant une première direction transversale T1 et suivant une deuxième direction transversale T2.

De préférence, la dimension transversale D1 de chaque protrusion 18 selon la première direction transversale T1, l'écartement E1 entre les protrusions 18 suivant la première direction transversale T1, la dimension transversale D2 de chaque protrusion 18 selon la deuxième direction transversale T2 et l'écartement E2 entre les protrusions 18 suivant la deuxième direction transversale T2 sont sensiblement égaux.

Dans un exemple de réalisation, la dimension transversale D1 de chaque protrusion 18 selon la première direction transversale T1 et/ou la dimension transversale D2 de chaque protrusion 18 selon la deuxième direction transversale T2 est(sont) supérieure(s) au vingtième de l'épaisseur de la portion de connexion 8 avant soudage et/ou inférieure(s) à l'épaisseur de la portion de connexion 8 avant soudage.

Dans un exemple de réalisation, l'écartement E1 entre les protrusions 18 adjacentes selon la première direction transversale T1 et/ou l'écartement E2 entre les protrusions 18 adjacentes selon la deuxième direction transversale T2 est(sont) supérieur(s) au vingtième de l'épaisseur de la portion de connexion 8 avant soudage et/ou inférieure(s) à l'épaisseur de la portion de connexion 8 avant soudage.

Lorsque le composant électrique 6 est un fil électrique, de section circulaire, l'épaisseur de la portion de connexion 8 avant soudage correspondant au diamètre du composant électrique 6.

La portion de connexion 8 est soudée sur la couche conductrice 4 par exemple par soudage par ultrasons. Dans ce cas, la tête de soudage 14 est une tête de soudage par ultrasons ou « sonotrode ».

De manière connue, pour le soudage par ultrasons, la tête de soudage 14 est reliée à une générateur d'ultrasons (non représenté) pour la génération d'ultrasons dans la tête de soudage 14 appliquée contre la portion de connexion 8, elle-même appliquée sur la couche conductrice 4.

Un procédé de fabrication de la pièce 2 comprend la fourniture d'une couche conductrice 4 réalisée dans un textile conducteur d'électricité, l'application de la portion de connexion 8 du composant électrique 6 contre la couche conductrice 4, et le soudage de la portion de connexion 8 du composant électrique 6 sur la couche conductrice 4, par exemple par soudage par ultrasons, en particulier à l'aide d'une tête de soudage 14 telle que décrite ci-dessus.

La couche conductrice 4, sur laquelle est fixée et raccordée électriquement la portion de connexion 8 du composant électrique 6 est, par exemple fixée sur un support.

Avantageusement, le support est réalisé dans un matériau composite comprenant des fibres de renfort, de préférences des fibres de renfort naturelles, en particulier des fibres de lin, des fibres de chanvre, des fibres de kénaf et/ou des fibres de bois, noyées dans une matrice, de préférence une matrice thermoplastique, en particulier une matrice en polypropylène.

Un matériau comprenant des fibres naturelles noyées dans une matrice ne polypropylène est également connu sous l'acronyme NFPP pour « Natural Fibre PolyPropylene » en anglais.

La couche conductrice 4 peut être facilement assemblée avec un tel support du fait de la présence de fibres thermoplastiques dans le textile formant la couche conductrice 4, qui peuvent se lier avec la matrice thermoplastique du support, par exemple par pressage, optionnellement avec chauffage.

La pièce 2 peut comprendre une couche conductrice 4 ou plusieurs couches conductrices 4. Chaque couche conductrice 4 peut être associée à un composant électrique 6 ou plusieurs composants électriques 6, chaque composant électrique 6 ayant une portion de connexion 8 soudée sur la couche conductrice 4 associée.

De manière générale, la pièce 2 comprend une ou plusieurs couches conductrices 4, chaque couche conductrice 4 étant associée à au moins un composant électrique 6 possédant une portion de connexion 8 soudée sur cette couche conductrice 4.

Comme illustré sur la Figure 5, dans un exemple de réalisation particulier, la pièce 2 comprend un stratifié 20 formé de plusieurs couches superposées incluant la couche conductrice 4 et, en outre, une couche de support 22.

Le stratifié 20 possède une face avant 20A destinée à être visible et une face arrière 20B opposée à la face avant 20A.

La couche de support 22 définit un support. La couche de support 22 confère sa forme au stratifié 4, ainsi que ses caractéristiques mécaniques, notamment sa rigidité.

La couche de support 22 est par exemple réalisée en un matériau plastique ou un matériau composite.

Dans un exemple de réalisation, la couche de support 22 est réalisée dans un matériau composite comprenant des fibres naturelles noyées dans une matrice en matériau plastique, en particulier une matrice en polypropylène. Les fibres naturelles comprennent par exemple des fibres de lin, des fibres de chanvre, des fibres de kénaf et/ou des fibres de bois.

La couche de support 22 présente par exemple une forme plane ou une forme tridimensionnelle avec des zones en reliefs. La couche de support 22 comprend par exemple une zone en saillie par rapport au reste de la couche de support 22 pour former un accoudoir. La couche de support 22 est par exemple formée par moulage par injection dans une cavité de moulage présentant la forme souhaitée de la couche de support.

La couche de support 22 possède une face avant 22A tournée du côté de la face avant 20A du stratifié 20, et une face arrière 22B opposée à sa face avant 22A.

En option, le stratifié comprend une couche de décor 24. La couche de décor 24 définit par exemple la face avant 20A du stratifié 20, destiné à être visible.

La couche de décor 24 recouvre au moins une partie la face avant 22A de la couche de support 22. Dans un exemple de réalisation, la couche de décor 24 recouvre entièrement la face avant 22A de la couche de support 22.

La couche de décor 24 comprend une face avant 24A tournée à l'opposé de la couche de support 22 et une face arrière 24B tournée vers la couche de support 22.

La couche de décor 24 confère son aspect et/ou son toucher à la pièce 2. La couche de décor 24 est réalisée en un matériau présentant un aspect et/ou un toucher particulier que l'on souhaite conférer à la pièce de véhicule automobile 2. La couche de décor 24 est par exemple réalisée en matériau textile, en matériau plastique, en matériau ligneux, en cuir, en similicuir ou autre.

La couche de décor 24 est conformée à la couche de support 22, c'est-à-dire qu'elle épouse sensiblement la forme de la face avant 22A de la couche de support 22, dans la zone de la face avant 22A de la couche de support 22 que la couche de décor 24 recouvre.

La face avant 24A de la couche de décor 24 peut comprendre des indications à destination d'un utilisateur, par exemple pour lui indiquer la présence d'une zone fonctionnelle, comme cela sera décrit ultérieurement.

En option, la couche de décor 24 est translucide, au moins dans certaines zones translucides laissant passer la lumière de la face arrière 24B vers la face avant 24A de la couche de décor 24. Ceci permet de rétroéclairer ces zones afin d'informer un utilisateur de la présence d'une zone fonctionnelle par exemple.

La couche conductrice 4 permet de créer des circuits électriques fonctionnels intégrés au stratifié 20.

Dans un exemple de réalisation, la couche conductrice 4 comprend au moins un motif 26 formé par au moins une zone conductrice 28 formée par la couche conductrice 4 et au moins une zone non-conductrice 30, chaque zone conductrice 28 du motif 26 étant une zone pleine de la couche conductrice 4 et chaque zone non-conductrice 30 du motif 26 étant formée par une ouverture traversante 32 ménagée au travers de la couche conductrice 4.

Chaque motif 26 présente des formes adaptées pour définir un circuit électrique fonctionnel réalisée une fonction particulière lorsque chaque zone conductrice 28 du motif 26 est alimentée en électricité via un composant électrique 6 soudé sur la couche conductrice 4.

Dans un exemple de réalisation, la fonction réalisée par le circuit électrique fonctionnel est une fonction d'interaction avec un utilisateur sur la face avant 20A du stratifié 20.

Autrement dit, le circuit électrique fonctionnel est configuré pour réaliser une interface homme-machine, un utilisateur pouvant interagir avec la face avant 20A du stratifié 20 pour activer, commander et/ou influencer une fonction réalisée par une machine reliée à la couche conductrice 4 via un composant électrique 6.

Le circuit électrique fonctionnel est par exemple un circuit résistif ou un circuit capacitif propre à détecter le contact et/ou la proximité d'un doigt d'un utilisateur avec la face avant 20A du stratifié 20 au droit du circuit électrique fonctionnel formé par le motif 18.

Le circuit électrique fonctionnel formé par chaque motif 26 définit par exemple un bouton tactile, un curseur tactile ou une surface tactile, en particulier une surface tactile multipoints définissant plusieurs points d'interaction.

Dans un autre exemple de réalisation, le circuit électrique fonctionnel est par exemple un circuit résistif chauffant. Ceci permet de réaliser une pièce de véhicule automobile 2 chauffante, i.e. intégrant une fonction de chauffage.

Chaque motif 26 est relié à une source électrique via un composant électrique 6 soudé sur la couche conductrice 4 pour son alimentation en électricité.

Une couche conductrice 4 est munie d'un motif 26 ou de plusieurs motifs 26. Un composant électrique 6 permet de relier un motif 26 ou plusieurs motifs 26 d'une couche conductrice 4 à une source électrique.

Le stratifié 20 comprend un ou plusieurs couches conductrices 4, chaque couche conductrice 4 étant associée à au moins un composant électrique 6 ayant une portion de connexion 8 soudée sur cette couche conductrice 4.

Avantageusement, chaque couche conductrice 4 comprend au moins un motif 26 définissant un circuit électrique fonctionnel.

Dans un exemple de réalisation, comme illustré en traits pleins sur la Figure 5, le stratifié 20 comprend une couche conductrice 4 disposée sur la face avant de la couche de support 22, et en particulier, le cas échéant, une couche conductrice 4 interposée entre la couche de support 22 et la couche de décor 24.

En variante ou en option, comme illustré en traits mixtes sur la Figure 5, le stratifié comprend une couche conductrice 4 recouvrant la face arrière 22B de la couche de support 22.

Ainsi, le stratifié 20 comprend par exemple une seule couche conductrice 4 disposée sur la face avant 22A de la couche de support 22, une seule couche conductrice 4 disposée sur la face arrière 22B de la couche de support 22, ou deux couches conductrices 4.

Lorsque le stratifié 20 comprend deux couches conductrices 4, et, de préférence, ces couches conductrices 4 sont situées de part et d'autre de la couche de support 22, qui est prise en sandwich entre les deux couches conductrices 4. Chaque couche conductrice 4 est de préférence en contact avec une face respective de la couche de support 22.

Un exemple de réalisation avec deux couches conductrices 4 est particulièrement adapté pour la réalisation d'un capteur capacitif utilisant deux circuits électriques fonctionnels, chaque circuit électrique fonctionnel étant formé dans une couche conductrice 4 respective parmi les deux couches conductrices 4, les deux circuits électriques étant superposés. Un tel capteur capacitif permet de détecter un contact et/ou la proximité d'un doigt d'un utilisateur.

Chaque couche conductrice 4 est fixée sur la couche de support 20 par exemple par application de la couche conductrice 4 contre la couche de support 20 avec mise sous pressions et/ou chauffage.

Lorsque la couche de support 22 est réalisée dans un matériau thermoplastique ou comprend une matrice thermoplastique, ceci permet d'obtenir une adhésion entre la matrice thermoplastique de la couche de support 22 et les fibres thermoplastiques de la couche conductrice 4.

L'adhésion est particulièrement bonne lorsque les fibres thermoplastiques et le matériau thermoplastique ou la matrice thermoplastique sont réalisés dans le même matériaux, par exemple en polypropylène.

En variante, chaque couche conductrice 4 est fixée sur la couche de support 22 par collage, à l'aide d'une couche de colle interposée entre la couche conductrice 4 et la couche de support 22.

Chaque couche conductrice 4, réalisée dans un textile formé de fibres conductrices et de fibres thermoplastique et appliquée contre la couche de support 22 pour obtenir le stratifié 20, renforce la couche de support 22 et définit ainsi une couche de renfort.

Ceci est particulièrement vrai en ce qui concerne une couche conductrice 4 réalisée dans un textile formé de fibres de carbone et de fibres thermoplastiques, en particulier de fibres de polypropylène.

Un procédé de fabrication de la pièce 2 comprend la fourniture d'une couche de support 22, la fourniture d'au moins une couche conductrice 4, et l'assemblage de la couche de support 22 avec chaque couche conductrice 4 pour former un stratifié 20, par exemple par mise en pression et/ou chauffage.

En option le procédé de fabrication comprend la réalisation de chaque motif 26 dans chaque couche conductrice 4, et ménageant une ou plusieurs ouverture(s) traversante(s) 32 à travers cette couche conductrice 4.

Chaque ouverture traversante 32 ménagée dans une couche conductrice 4 est creusée sur toute l'épaisseur de cette couche conductrice 4, par exemple par usinage au laser, par usinage mécanique et/ou par attache chimique.

De préférence, la réalisation de chaque motif 26 dans chaque couche conductrice 4 est effectuée après application et fixation de la couche conductrice 4 sur la couche de support 22.

Le procédé de fabrication comprend, le cas échéant, l'assemblage de la couche de décor 24, par exemple sur la face avant 22A de la couche de support 22 ou sur une couche conductrice 4 recouvrant la face avant 22A de la couche de support 22. La fixation est réalisée par exemple par collage.

L'invention n'est pas limitée aux exemples de réalisation est aux variantes décrites ci-dessus.

Sur la Figure 1, dans les portions de contact électriques 12A, le conducteur électrique 12 est en contact avec la couche conductrice 4, la gaine 10 s'étendant du côté du conducteur électrique 12 opposé à la couche conductrice 4 et recouvrant le conducteur électrique 12. En variante non représentée, la partie du conducteur électrique 12 opposée à la couche conductrice 4 dans les portions de contact électrique 12A n'est pas recouverte de gaine 10.

## Revendications

1. Pièce, par exemple pièce de garnissage pour véhicule automobile, comprenant au moins une couche conductrice (4) réalisée dans un textile conducteur d'électricité, le textile comprenant de fibres conductrices réalisées dans un matériau conducteur d'électricité et des fibres thermoplastiques réalisées dans un matériau thermoplastique, et au moins un composant électrique (6) associé à chaque couche conductrice (4), chaque composant électrique (6) comprenant une gaine (10) et un conducteur électrique (12) s'étendant à l'intérieur de la gaine (10), la gaine (10) étant réalisée dans un matériau thermoplastique électriquement isolant, chaque composant électrique (6) comprenant une portion de connexion (8) liée mécaniquement à la couche conductrice (4) associée par soudage de la gaine (10) sur la couche conductrice (4), dans laquelle, dans la portion de connexion (8), le conducteur électrique (12) est en contact électrique avec la couche conductrice (4) par une ou plusieurs portion(s) de contact (12A) du conducteur électrique (12) et la gaine (10) est liée mécaniquement avec la couche conductrice (4) par une ou plusieurs portions de liaison (10A) de la gaine (10), la ou les portion(s) de contact (12A) étant contiguë(s) avec la ou les portion(s) de liaison (10A).

2. Pièce selon la revendication 1, comprenant plusieurs portions de contact (12A) séparées les unes des autres par une ou plusieurs portion(s) de liaison (10A).

3. Pièce selon la revendication 1 ou la revendication 2, dans lequel, dans la portion de connexion (8), le conducteur électrique (12) comprend au moins une portion écartée (12B) qui est écartée de la couche conductrice (4), une portion de liaison (10A) de la gaine (10) étant interposée entre chaque partie écartée (12B) du conducteur électrique (12) et la couche conductrice (4).

4. Pièce selon l'une quelconque des revendications précédentes, dans laquelle le composant électrique (6) est un fil électrique ou une nappe électrique.

5. Pièce selon l'une quelconque des revendications précédentes, dans laquelle les fibres conductrices sont des fibres de carbone et/ou des fils métalliques et/ou les fibres thermoplastiques sont des fibres de polypropylène des fibres de polyoléfine, des fibres de polypropylène, des fibres de polyester, de fibres de polyéthylène téréphtalate (PTFE), des fibres de polycarbonate (PC) et/ou des fibres de polyméthacrylate de méthyle (PMMA).

6. Pièce selon l'une quelconque des revendications précédentes, comprenant un stratifié (20) formé par une couche de support (22) et chaque couche conductrice (4).

7. Pièce selon la revendication 6, dans lequel la couche de support (22) est réalisée dans un matériau composite comprenant des fibres de renfort noyées dans une matrice, la matrice étant réalisée dans un matériau thermoplastique.

8. Pièce selon la revendication 7, dans lequel les fibres de renfort sont des fibres naturelles et/ou la matrice du support est réalisée en polypropylène.

9. Pièce selon l'une quelconque des revendications précédentes, dans laquelle chaque couche conductrice (4) comprend au moins un motif (26) formé par au moins une zone conductrice (28) de la couche conductrice et au moins une zone non-conductrice (30) définie par une ouverture traversante (32) ménagée dans la couche conductrice (4), le motif (26) définissant un circuit électrique fonctionnel configuré pour la détection d'une interaction d'un utilisateur avec la pièce (2) au droit du motif (26).

10. Pièce selon l'une quelconque des revendications précédentes, dans lequel le textile est un textile non-tissé.

11. Procédé de fabrication d'une pièce, par exemple une pièce de garnissage de véhicule automobile, le procédé de fabrication comprenant la fourniture d'au moins une couche conductrice (4) réalisée dans un textile conducteur d'électricité comprenant des fibres conductrices réalisée dans un matériau conducteur d'électricité et de fibres thermoplastiques réalisée dans un matériau thermoplastique, la fourniture d'au moins un composant électrique (6) associé à chaque couche conductrice (4), chaque composant électrique (6) comprenant une gaine (10) et un conducteur électrique (12) s'étendant à l'intérieur de la gaine (10), la gaine (10) étant réalisée dans un matériau thermoplastique électriquement isolant, et le soudage d'une portion de connexion (8) de chaque composant électrique (6) sur le couche conductrice (4) associé de telle manière que la gaine (10) est soudée sur la couche conductrice (4) et que l'élément conducteur est en contact électrique avec la couche conductrice (4).

12. Procédé de fabrication selon la revendication 11, dans lequel le soudage est réalisé à l'aide d'une tête de soudage (14) possédant une surface de soudage (16) destinée à être pressée contre la portion de connexion (8) d'un composant électrique (6) pour souder la gaine (10) sur la couche conductrice (4) associée, la tête de soudage (14) comprenant une ou plusieurs protrusion(s) (18) en saillie sur la surface de soudage (16) pour pousser le conducteur électrique (12), qui s'étend à l'intérieur de la gaine (10) dans la portion de connexion (8), en contact électrique avec la couche conductrice (4) lors du soudage de la gaine (10) sur la couche conductrice (4).

13. Procédé de fabrication selon la revendication 11 ou la revendication 12, dans lequel le soudage est réalisé par ultrasons.

14. Procédé de fabrication selon l'une quelconque des revendications 11 à 13, le procédé de fabrication comprenant la réalisation, dans au moins une ou dans chaque couche conductrice, d'au moins un motif formé par au moins une zone conductrice de la couche conductrice et au moins une zone non-conductrice définie par une ouverture traversante ménagée dans la couche conductrice, le motif définissant un circuit électrique fonctionnel configuré pour la détection d'une interaction d'un utilisateur avec la pièce au droit du motif.

15. Procédé de fabrication selon l'une quelconque des revendications 11 à 14, le procédé de fabrication comprenant la formation d'un stratifié comprenant, en superposition, une couche de support et chaque couche conductrice, la couche de support étant par exemple réalisée dans un matériau composite comprenant des fibres de renfort noyées dans une matrice, la matrice étant réalisée dans un matériau thermoplastique.

## Patentansprüche

1. Teil, zum Beispiel Verkleidungsteil für ein Kraftfahrzeug, mit mindestens einer leitfähigen Schicht (4) aus einem elektrisch leitfähigen Textil, wobei das Textil leitfähige Fasern aus einem elektrisch leitfähigen Material und thermoplastische Fasern aus einem thermoplastischen Material umfasst, und mindestens eine elektrische Komponente (6), die mit jeder leitfähigen Schicht (4) verbunden ist, wobei jede elektrische Komponente (6) eine Hülle (10) und einen elektrischen Leiter (12) umfasst, der sich innerhalb der Hülle (10) erstreckt, wobei die Hülle (10) aus einem elektrisch isolierenden thermoplastischen Material hergestellt ist, jede elektrische Komponente (6) einen Verbindungsabschnitt (8) umfasst, der mechanisch mit der zugehörigen leitenden Schicht (4) verbunden ist, indem die Hülle (10) auf die leitende Schicht (4) gelötet wird, wobei in dem Verbindungsabschnitt (8), der elektrische Leiter (12) durch einen oder mehrere Kontaktabschnitte (12A) des elektrischen Leiters (12) in elektrischem Kontakt mit der leitfähigen Schicht (4) steht und die Hülle (10) durch einen oder mehrere Verbindungsabschnitte (10A) der Hülle (10) mechanisch mit der leitenden Schicht (4) verbunden ist, wobei der eine oder die mehreren Kontaktabschnitte (12A) an den einen oder die mehreren Verbindungsabschnitte (10A) angrenzt bzw. angrenzen.

2. Teil nach Anspruch 1, das mehrere Kontaktabschnitte (12A) umfasst, die durch einen oder mehrere Verbindungsabschnitte (1 0A) voneinander getrennt sind.

3. Teil nach Anspruch 1 oder 2, wobei in dem Verbindungsabschnitt (8) der elektrische Leiter (12) mindestens einen beabstandeten Abschnitt (12B) umfasst, der von der leitenden Schicht (4) beabstandet ist, wobei ein Verbindungsabschnitt (10A) der Hülle (10) zwischen jedem beabstandeten Abschnitt (12B) des elektrischen Leiters (12) und der leitfähigen Schicht (4) angeordnet ist.

4. Teil nach einem der vorstehenden Ansprüche, wobei die elektrische Komponente (6) ein elektrischer Draht oder eine elektrische Matte ist.

5. Teil nach einem der vorstehenden Ansprüche, wobei die leitenden Fasern Kohlenstofffasern und/oder Metallfäden sind und/oder die thermoplastischen Fasern Polypropylenfasern, Polyolefinfasern, Polypropylenfasern, Polyesterfasern, Polyethylenterephthalatfasern (PTFE), Polycarbonatfasern (PC) und/oder Polymethylmethacrylatfasern (PMMA) sind.

6. Teil nach einem der vorstehenden Ansprüche, umfassend ein Laminat (20), das aus einer Trägerschicht (22) und jeder leitfähigen Schicht (4) gebildet wird.

7. Teil nach Anspruch 6, wobei die Stützschicht (22) aus einem Verbundmaterial hergestellt ist, das in eine Matrix eingebettete Verstärkungsfasern umfasst, wobei die Matrix aus einem thermoplastischen Material hergestellt ist.

8. Teil nach Anspruch 7, wobei die Verstärkungsfasern Naturfasern sind und/oder die Matrix des Trägers aus Polypropylen hergestellt ist.

9. Teil nach einem der vorstehenden Ansprüche, wobei jede leitfähigen Schicht (4) mindestens ein Muster (26) umfasst, das durch mindestens einen leitenden Bereich (28) der leitenden Schicht und mindestens einen nichtleitenden Bereich (30) gebildet wird, der durch eine Durchgangsöffnung (32) definiert ist, die in der leitfähigen Schicht (4) ausgebildet ist, wobei das Muster (26) einen funktionalen elektrischen Schaltkreis definiert, der für die Erfassung einer Interaktion eines Benutzers mit dem Teil (2) an dem Muster (26) konfiguriert ist.

10. Teil nach einem der vorstehenden Ansprüche, wobei das Textil ein nicht gewebtes Textil ist.

11. Herstellungsverfahren eines Teils, zum Beispiel eines Verkleidungsteils eines Kraftfahrzeugs, wobei das Herstellungsverfahren die Bereitstellung mindestens einer leitfähigen Schicht (4), die aus einem elektrisch leitenden Textil hergestellt ist, das leitende Fasern, die aus einem elektrisch leitenden Material hergestellt sind, und thermoplastische Fasern, die aus einem thermoplastischen Material hergestellt sind, umfasst, die Bereitstellung mindestens einer elektrischen Komponente (6), die mit jeder leitfähigen Schicht (4) verbunden ist, umfasst, wobei jede elektrische Komponente (6) eine Hülle (10) und einen elektrischen Leiter (12) umfasst, der sich innerhalb der Hülle (10) erstreckt, wobei die Hülle (10) aus einem elektrisch isolierenden thermoplastischen Material hergestellt ist, und Anschweißen eines Verbindungsabschnitts (8) jeder elektrischen Komponente (6) an die zugehörige leitfähige Schicht (4), so dass die Hülle (10) an die leitfähige Schicht (4) geschweißt wird und das leitende Element in elektrischem Kontakt mit der leitfähigen Schicht (4) steht.

12. Herstellungsverfahren nach Anspruch 11, bei dem das Schweißen unter Verwendung eines Schweißkopfes (14) durchgeführt wird, der eine Schweißfläche (16) aufweist, die dazu bestimmt ist, zum Schweißen der Hülle gegen den Anschlussabschnitt (8) eines elektrischen Bauteils (6) gedrückt zu werden (10) mit der zugeordneten leitfähigen Schicht (4), wobei der Schweißkopf (14) einen oder mehrere Vorsprung(e) (18) umfasst, die von der Schweißfläche (16) abstehen, um den elektrischen Leiter (12) zu drücken, der sich im Inneren erstreckt Mantel (10) im Verbindungsabschnitt (8), in elektrischen Kontakt mit der leitenden Schicht (4), wenn der Mantel (10) auf der leitenden Schicht (4) verschweißt wird.

13. Herstellungsverfahren nach Anspruch 11 oder 12, bei dem das Schweißen mit Ultraschall durchgeführt wird.

14. Herstellungsverfahren nach einem der Ansprüche 11 bis 13, wobei das Herstellungsverfahren in mindestens einer oder jeder leitenden Schicht die Herstellung mindestens eines Musters umfasst, das durch mindestens einen leitenden Bereich der leitfähigen Schicht und mindestens einen nichtleitenden Bereich gebildet wird, der durch eine Durchgangsöffnung in der leitfähigen Schicht definiert ist, wobei das Muster einen funktionalen elektrischen Schaltkreis definiert, der so konfiguriert ist, dass er eine Interaktion eines Benutzers mit dem Teil an dem Muster erfasst.

15. Herstellungsverfahren nach einem der Ansprüche 11 bis 14, wobei das Herstellungsverfahren die Bildung eines Laminats umfasst, das in Überlagerung eine Trägerschicht und jede leitfähige Schicht umfasst, wobei die Trägerschicht beispielsweise aus einem Verbundmaterial hergestellt ist, das in eine Matrix eingebettete Verstärkungsfasern umfasst, wobei die Matrix aus einem thermoplastischen Material hergestellt ist.

## Claims

1. A part, for example a trim part for a motor vehicle, comprising at least one conductive layer (4) made of an electrically conductive textile, the textile comprising conductive fibers made of an electrically conductive material and thermoplastic fibers made of a thermoplastic material, and at least one electrical component (6) associated with each conductive layer (4), each electrical component (6) comprising a sheath (10) and an electrical conductor (12) extending inside the sheath (10), the sheath (10) being made of an electrically insulating thermoplastic material, each electrical component (6) comprising a connection portion (8) mechanically linked to the associated conductive layer (4) by welding the sheath (10) to the conductive layer (4), wherein, in the connection portion (8), the electrical conductor (12) is in electrical contact with the conductive layer (4) via one or more contact portions (12A) of the electrical conductor (12), and the sheath (10) is mechanically linked to the conductive layer (4) via one or more linking portions (10A) of the sheath (10), the contact portion(s) (12A) being contiguous with the linking portion(s) (10A).

2. The part according to claim 1, comprising a plurality of contact portions (12A) separated from one another by one or more linking portions (10A).

3. The part according to claim 1 or claim 2, wherein, in the connection portion (8), the electrical conductor (12) comprises at least one spaced-apart portion (12B) which is spaced apart from the conductive layer (4), a linking portion (10A) of the sheath (10) being interposed between each spaced-apart portion (12B) of the electrical conductor (12) and the conductive layer (4).

4. The part according to any of the preceding claims, wherein the electrical component (6) is an electrical wire or an electrical ribbon cable.

5. The part according to any of the preceding claims, wherein the conductive fibers are carbon fibers and/or metal wires and/or the thermoplastic fibers are polypropylene fibers, polyolefin fibers, polypropylene fibers, polyester fibers, polyethylene terephthalate (PTFE) fibers, polycarbonate (PC) fibers and/or polymethyl methacrylate (PMMA) fibers.

6. The part according to any of the preceding claims, comprising a laminate (20) formed by a support layer (22) and each conductive layer (4).

7. The part according to claim 6, wherein the support layer (22) is made of a composite material comprising reinforcing fibers embedded in a matrix, the matrix being made of a thermoplastic material.

8. The part according to claim 7, wherein the reinforcing fibers are natural fibers and/or the support matrix is made of polypropylene.

9. The part according to any of the preceding claims, wherein each conductive layer (4) comprises at least one pattern (26) formed by at least one conductive area (28) of the conductive layer and at least one non-conductive area (30) defined by a through opening (32) provided in the conductive layer (4), the pattern (26) defining a functional electrical circuit configured to detect a user's interaction with the part (2) at the pattern (26).

10. The part according to any of the preceding claims, wherein the textile is a non-woven textile.

11. A method for manufacturing a part, for example a motor vehicle trim part, the manufacturing method comprising the provision of at least one conductive layer (4) made of at least one conductive layer made of an electrically conductive textile, the textile comprising conductive fibers made of an electrically conductive material and thermoplastic fibers made of a thermoplastic material, the provision of at least one electrical component (6) associated with each conductive layer (4), each electrical component (6) comprising a sheath (10) and an electrical conductor (12) extending inside the sheath (10), the sheath (10) being made of an electrically insulating thermoplastic material, and the welding of a connection portion (8) of each electrical component (6) on the conductive layer (4) associated in such a way that the sheath (10) is welded onto the conductive layer (4) and that the conductive element is in electrical conduct with the conductive layer (4).

12. The manufacturing method according to claim 11, wherein the welding is carried out using a welding head (14) having a welding surface (16) intended to be pressed against the connection portion (8) of an electrical component (6) to weld the sheath (10) to the associated conductive layer (4), the welding head (14) comprising one or more protrusions (18) projecting from the welding surface (16) to urge the electrical conductor (12), which extends within the sheath (10) into the connection portion (8), into electrical contact with the conductive layer (4) during the welding of the sheath (10) to the conductive layer (4).

13. The manufacturing method according to claim 11 or claim 12, wherein the welding is carried out ultrasonically.

14. The manufacturing method according to any one of claims 11 to 13, the manufacturing method comprising the production, in at least one or each conductive layer, at least one pattern formed by at least one conductive area of the conductive layer and at least one non-conductive area defined by a through-opening in the conductive layer, the pattern defining a functional electrical circuit configured to detect user interaction with the part at the pattern.

15. The manufacturing method according to any one of claims 11 to 14, the manufacturing process comprising forming a laminate comprising, in superposition, a support layer and each conductive layer, the support layer being made, for example, of a composite material comprising reinforcing fibers embedded in a matrix, the matrix being made of a thermoplastic material.
